# EUROPÄISCHE PATENTSCHRIFT

(11) **EP 1 002 223 B1**
(45) Veröffentlichungstag und Bekanntmachung des Hinweises auf die Patenterteilung: **09.10.2002**
(21) Anmeldenummer: 98939654.4
(22) Anmeldetag: 04.08.1998
(51) Int. Cl.: G01N 17/00

(54) **VERFAHREN UND EINRICHTUNG ZUM BESTIMMEN DES ZEITLICHEN VERLAUFS DER BESTRAHLUNGSSTÄRKE IN EINEM BEWITTERUNGSPRÜFGERÄT**
METHOD AND DEVICE FOR DETERMINING THE TIME CURVE OF THE INTENSITY OF RADIATION IN A WEATHERING TESTING DEVICE
PROCEDE ET DISPOSITIF PERMETTANT DE DETERMINER LA COURBE DANS LE TEMPS DE L'INTENSITE DE RAYONNEMENT DANS UN DISPOSITIF D'ESSAI DE RESISTANCE AUX INTEMPERIES

(30) Priorität: 06.08.1997 DE 19733957
(43) Veröffentlichungstag der Anmeldung: 24.05.2000
(73) Patentinhaber: Atlas Material Testing Technology GmbH, 63589 Linsengericht/Altenhasslau (DE)
(72) Erfinder: BERNATEK, Christian, D-63110 Rodgau (DE); RUDOLPH, Bernd, D-63755 Alzenau (DE)
(74) Vertreter: Schumacher, Bernd, Dipl.-Ing.
(86) Internationale Anmeldenummer: EP9804855
(87) Internationale Veröffentlichungsnummer: WO99010727

(56) Entgegenhaltungen:
- DE-A- 2 940 325
- DE-A- 3 310 631

## Beschreibung

Die Erfindung betrifft ein Verfahren zum Bestimmen des zeitlichen Verlaufs der Bestrahlungsstärke am Ort von zumindest einer zu untersuchenden Probe, die sich in einem abgeschlossenen Probenraum eines Bewitterungsprüfgerätes auf einer kreisförmigen Bewegungsbahn um eine stationäre Bestrahlungsanordnung zum Erzeugen von UV- und Globalstrahlung bewegt, mit wenigstens einem die momentane Bestrahlungsstärke der Bestrahlungsanordnung erfassenden Sensor, der sich zusammen mit der zumindest einen Probe sowie zu dieser in Bezug auf die Bestrahlungsanordnung versetzt, wie in Umfangsrichtung der Bewegungsbahn versetzt, im wesentlichen auf der Bewegungsbahn bewegt, wobei von dem Sensor in zeitlichen Abständen ein der momentanen Bestrahlungsstärke entsprechendes elektrisches Meßsignal abgeleitet wird. Die Erfindung betrifft ferner eine zum Durchführen dieses Verfahrens dienende Einrichtung.

Bewitterungsprüfgeräte dienen zur Lichtechtheits- und Alterungsprüfung beliebiger Proben, die sich in dem abgeschlossenen Probenraum auf einer kreisförmigen Bewegungsbahn verteilt um die stationäre Bestrahlungsanordnung bewegen. Dabei können im Bewitterungsprüfgerät auch Regenstäbe oder andere stationäre Geräteteile vorgesehen sein, um die Probenuntersuchungen unter Berücksichtigung der geforderten Umgebungsbedingungen durchführen zu können. Dadurch wird der Strahlungsweg von der Bestrahlungsanordnung zu den Proben wie auch zu dem mit diesen mitbewegten Sensor wiederholt von stationären gerätetechnischen Hindernissen unterbrochen oder gestört. Bei den bekannten Geräten wird der zeitliche Verlauf der Bestrahlungsstärke dadurch festgestellt, daß in vergleichweise großen Zeitabständen bzw. an einzelnen Umfangspositionen der Bewegungsbahn praktisch einzelne Momentaufnahmen der Bestrahlungsstärke gemacht werden. Deshalb ist es nicht abschätzbar, wie sich die gerätetechnisch bedingten, unvermeidbaren Strahlenunterbrechungen auf den Meßfehler bei der Erfassung der Bestrahlungsstärke auswirken. Es kann also durchaus vorkommen, daß die Strahlenunterbrechungen wiederholt an ungünstigen Drehpositionen des Sensors um die Bestrahlungsanordnung auftreten, so daß erhebliche Meßfehler bezüglich der Bestrahlung der Proben auftreten.

Der vorliegenden Erfindung liegt die Aufgabe zugrunde, ein Verfahren und eine Einrichtung der im Oberbegriff genannten Art so auszubilden, daß unter Vermeidung der geschilderten Nachteile ein zuverlässigeres Erfassen des zeitlichen Verlaufs der Bestrahlungsstärke am Probenort möglich ist. Dabei sollen sich einzelne stationäre gerätetechnische Strahlenhindernisse praktisch nicht mehr ergebnisverfälschend auswirken. Das Verfahren soll ferner gut für eine technische Realisierung mit strom- bzw. energiesparenden Schaltungskomponenten geeignet sein, wie für einen Batterie- und Akkubetrieb einer entsprechend arbeitenden Einrichtung.

Zur Lösung der gestellten Aufgabe zeichnet sich ein Verfahren der im Oberbegriff von Anspruch 1 genannten Art erfindungsgemäß durch die im Kennzeichen dieses Anspruchs aufgeführten Merkmale aus, nämlich dadurch, daß das Meßsignal entsprechend einem ersten, einstellbaren Zeitraster mit relativ kurzen Rasterintervallen in jedem dieser kurzen Rasterintervalle mindestens einmal über ein bestimmtes Integrationsintervall einstellbarer zeitlicher Länge analog integriert wird, daß die so erhaltenen analog integrierten Meßwerte eines jeden kurzen Rasterintervalls digitalisiert werden, daß die digitalisierten Meßwerte mehrerer aufeinanderfolgender Rasterintervalle des ersten Zeitrasters entsprechend einem zweiten, einstellbaren Zeitraster mit vergleichsweise längeren Rasterintervallen in jedem dieser längeren Rasterintervalle arithmetisch addiert und gemittelt werden und daß die so erhaltenen arithmetisch addierten, gemittelten Meßwerte zeitlich zuordnungsfähig und abrufbar digital abgespeichert werden.

Bei diesem Verfahren wird der Einfluß einzelner stationärer gerätetechnischer Strahlenhindernisse auf das Meßergebnis praktisch ausgeschaltet, weil bei den in kurzen Zeitabständen wiederholten analogen Integrationsvorgängen mit zeitlich andauernden Integrationsintervallen und mit nachfolgender Addition sowie Mittelung mehrerer Einzelergebnisse strahlungsungünstige Momentansituationen im Ergebnis herausfallen bzw. praktisch nicht in Erscheinung treten. Wegen der nur relativ kurzen Integrationsintervalle mit nachfolgender Digitalisierung und digitaler Weiterverarbeitung sowie -speicherung eignet sich das Verfahren sehr gut für eine relativ einfache und preiswerte praktische Realisierung, wie für einen Batterie- sowie Akkubetrieb und damit für einen mobilen Einsatz entsprechend arbeitender Einrichtungen mit handelsüblichen preiswerten Schaltungskomponenten. Außerdem wird bei einem Netzbetrieb der Einfluß von möglichen Netzschwankungen bzw. -störungen auf das Meßergebnis weitgehend unterdrückt.

Wenn gemäß Anspruch 2 nur die arithmetisch addierten und gemittelten Meßwerte länger gespeichert werden, kann der zeitliche Verlauf der Bestrahlungsstärke auch über einen längeren Zeitraum ohne größeren Speicherungsaufwand erfaßt werden.

Die bevorzugten Merkmale der Ansprüche 3 und 4 führen wegen der insbesondere zufallsgesteuerten Verschiebung der Integrationsintervalle zu einer weiteren Verbesserung der Verfahrenssicherheit, weil ein gleichwirkender und sich damit aufaddierender Einfluß vorhandener Störgrößen noch eher vermieden wird. Das gilt einerseits für den Einfluß von Strahlungshindernissen wie auch für den Einfluß von Netzstörungen.

Die Maßnahmen der Ansprüche 5 bis 7 haben sich bei der praktischen Realisierung und bei der Handhabung des Verfahrens als günstig erwiesen. Entsprechendes gilt auch für die Weiterbildungen der Ansprüche 8 bis 10.

Gemäß Anspruch 11 können auch weitere Meßgrößen hinsichtlich ihres zeitlichen Verlaufs erfaßt und entsprechend der Bestrahlungsstärke behandelt werden.

Zur Lösung der gestellten Aufgabe zeichnet sich eine zum Durchführen des Verfahrens geeignete Einrichtung der im Oberbegriff von Anspruch 12 genannten Art erfindungsgemäß durch die im Kennzeichen dieses Anspruchs aufgeführten Merkmale aus, nämlich dadurch, daß an den Ausgang des Sensors ein getakteter analoger Integrator angeschlossen ist, der das Meßsignal entsprechend einem ersten, einstellbaren Zeitraster mit relativ kurzen Rasterintervallen in jedem dieser kurzen Rasterintervalle mindestens einmal über ein bestimmtes Integrationsintervall einstellbarer zeitlicher Länge analog integriert, daß an den Ausgang des Integrators ein Analog/Digital-Wandler angeschlossen ist, der die analog integrierten Meßwerte des Integrators jeweils am Ende der einzelnen Integrationsintervalle digitalisiert, daß an den Ausgang des Analog/Digital-Wandlers ein mittelwertbildendes Additionsglied angeschlossen ist, das die digitalisierten Meßwerte mehrerer aufeinanderfolgender Rasterintervalle des ersten Zeitrasters entsprechend einem zweiten, einstellbaren Zeitraster mit vergleichsweise längeren Rasterintervallen in jedem dieser längeren Rasterintervalle arithmetisch addiert und mittelt und daß an den Ausgang des Additionsgliedes ein Speicherglied zum zeitllich zuordnungsfähig abrufbaren Speichern aufeinanderfolgender, arithmetisch addierter, gemittelter Meßproben angeschlossen ist.

Diese Einrichtung erlaubt bei vergleichsweise einfachem sowie preiswertem Aufbau eine leichtes praktisches Realisieren des erfindungsgemäßen Verfahrens mit handelsüblichen Baukomponenten.

Gemäß Anspruch 13 können die Zeittakte eingestellt und den jeweiligen Betriebsbedingungen angepaßt werden. Der Taktgenerator sorgt stets für ein zeitrichtiges Arbeiten der von Ihm beeinflußten einzelnen Komponenten der Einrichtung. Dabei hat sich gemäß Anspruch 14 der Einsatz eines Mikroprozessors als besonders günstig erwiesen, zumal dieser handelsüblich sowie preiswert ist und energiesparend arbeitet. Der Mikroprozessor kann dabei den gesamten Betriebsablauf der Einrichtung steuern.

Eine Ausbildung gemäß Anspruch 15 ermöglicht in sehr einfacher Weise ein vorübergehendes schrittweise erneuerbares Speichern von Informationen, die dem zeitlichen Verlauf der Bestrahlungsstärke entsprechen.

Durch die Weiterbildung von Anspruch 16 können die Integrationsintervalle zur weiteren Fehlerunterdrückung zufallsgesteuert verschoben werden.

Die Erfindung wird nachfolgend an zeichnerisch dargestellten Ausführungsbeispielen näher erläutert. Es zeigen:
- Fig. 1: in einer schematischen Draufsicht ein Bewitterungsprüfgerät mit einer nach dem erfindungsgemäßen Verfahren arbeitenden Einrichtung,
- Fig. 2: in einem schematischen Blockschaltbild Schaltungsdetails der Einrichtung zum Durchführen des erfindungsgemäßen Verfahrens und
- Fig. 3: Diagramme zur weiteren beispielhaften Erläuterung der Erfindung.

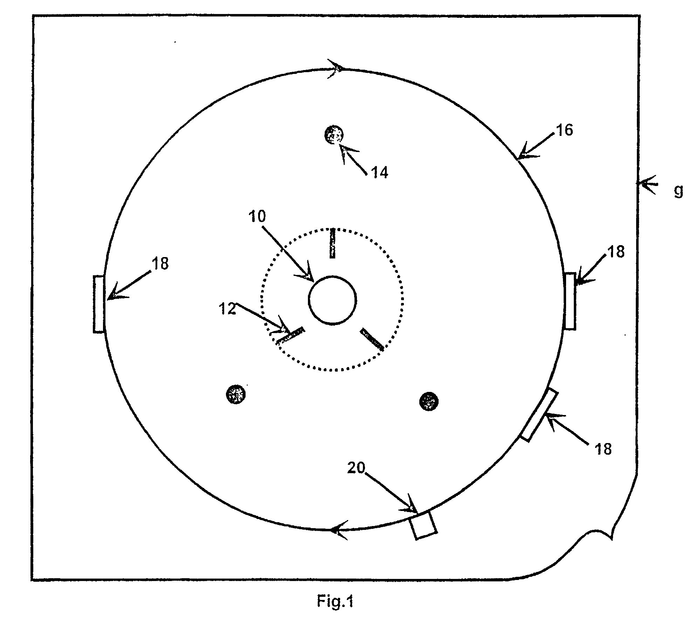

Gemäß Fig. 1 befindet sich in einem geschlossenen Gehäuse G eines Bewitterungsprüfgerätes eine ein- oder mehrteilig aufgebaute stationäre Bestrahlungsanordnung 10 zum Erzeugen von UV- und Globalstrahlung. Die Bestrahlungsanordnung 10 ist von stationären, strahlungstörenden, gerätetechnischen Hindernissen umgeben, wie beispielsweise von Absorberblechen 12, Regenstäben 14 und anderen mechanischen Geräteteilen. Eine kreisförmige Bewegungsbahn 16 verläuft um die beispielsweise zentrisch positionierte Bestrahlungsanordnung 10. Zu untersuchende Proben 18, von denen beispielhaft drei dargestellt sind, werden im Betrieb auf der Bewegungsbahn 16 um die Bestrahlungsanordnung 10 geführt und von der Strahlung der Bestrahlungsanordnung 10 beaufschlagt.

Der zeitliche Verlauf der Bestrahlungsstärke am Ort der zu untersuchenden Probe wird mit wenigstens einem auf die Strahlung von der Bestrahlungsanordnung 10 reagierenden Sensor 20 erfaßt. Dieser wird ebenfalls auf der Bewegungsbahn 16 mit den Proben mitbewegt und ist im vorliegenden Fall gegenüber den Proben 18 in Umfangsrichtung versetzt angeordnet. Stattdessen könnte er auch ohne Umfangsversetzung in Höhenrichtung gegenüber den Proben 18 versetzt angeordnet sein.

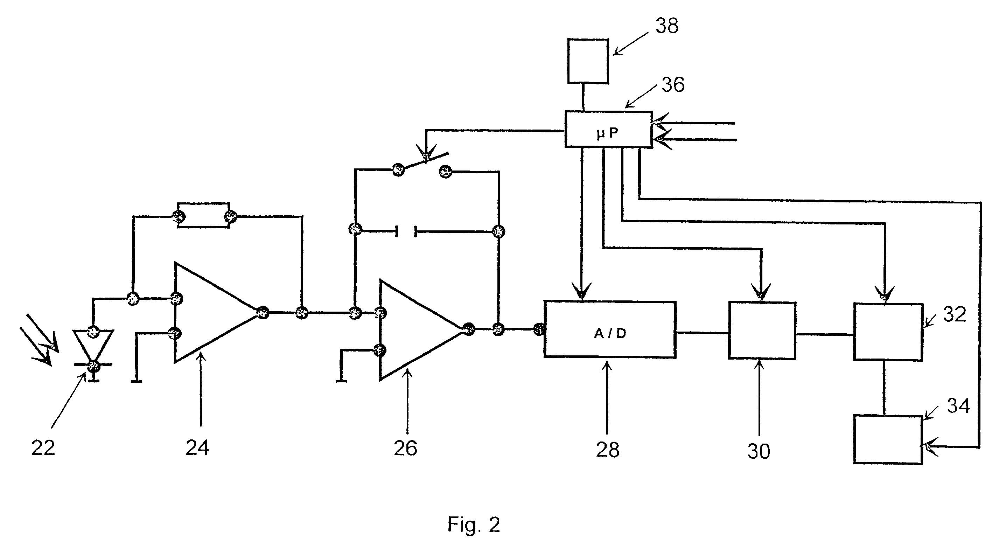

Die den Strahlenweg von der Bestrahlungsanordnung 10 zu den Proben 18 und auch zum Sensor 20 kreuzenden stationären mechanischen Geräteteile führen zu unvermeidbaren Meßfehlern. Diese können sich besonders dann äußerst nachteilig auswirken, wenn der Sensor 20 in größeren Zeitabständen nur kurze Momentaufnahmen der Bestrahlungsstärke vornimmt. Es kann dann sein, daß der Sensor 20 wiederholt nur im Strahlenstörungsbereich arbeitet. Auch können sich dann Netzstörungen wiederholt ungünstig auswirken. Zur Vermeidung dieser Nachteile ist die Einrichtung zum Durchführen des erfindungsgemäßen Verfahrens entsprechend Fig. 2 aufgebaut.

Gemäß Fig. 2 ist als Sensor 20 eine für die Strahlung der Bestrahlungsanordnung 10 empfindliche, auf der Bewegungsbahn 16 bewegte Empfangsdiode 22 ausgangsseitig über einen Verstärker 24 an einen getakteten Integrator 26 angeschlossen, der seinerseits mit einem Analog/Digital-Wandler 28 verbunden ist. Dessen Ausgang ist mit einem mittelwertbildenden Additionsglied 30 gekoppelt, das an ein Speicherglied 32 angeschlossenen ist. Der Speicherinhalt kann auf einem Sichtgerät 34 dargestellt werden. Ein Mikroprozessor 36 steuert die einzelnen Komponenten der Einrichtung und kann wie im vorliegenden Fall mit einem Zufallsgenerator 38 verknüpft sein.

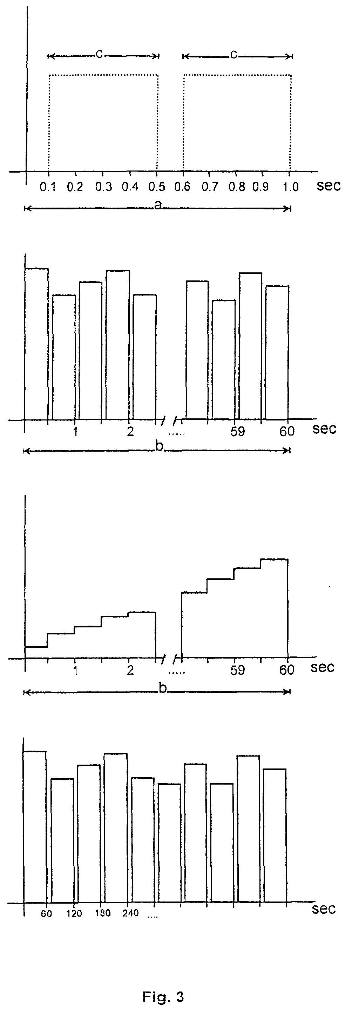

Der auch als Taktgenerator arbeitende Mikroprozessor 36 erzeugt ein erstes einstellbares Zeitraster mit relativ kurzen aufeinanderfolgenden Rasterintervallen a, die bei dem Beispiel aus Fig. 3 eine Länge von 1 Sekunde (oder 0,5 Sekunden) haben. Er erzeugt ferner noch kürzere Integrationsintervalle c, die gemäß Fig. 3 beispielsweise eine Länge von 0,3 Sekunden haben. Gemäß Fig. 3 werden beispielhaft pro Rasterintervall a zwei gleich lange Integrationsintervalle c erzeugt, die überlappungsfrei und mit gegenseitigem Zeitabstand auf das Rasterintervall a verteilt werden - gemäß dem Beispiel von Fig. 3 enden sie im Rasterintervall a bei 0,5 und bei 1,0 Sekunden.

Während eines jeden Integrationsintervalls c sorgt der Integrator 26 für ein analoges Integrieren des Meßsignals von der Empfangsdiode 22. Der am Ende eines jeden Integrationsintervalls c vorhandene Meßwert des Integrators 26 wird vom Analog/Digital-Wandler 28 digitalisiert. Eine Folge der digitalisierten Werte ist in Fig. 3 an zweiter Position von oben schematisch dargestellt.

Der Mikroprozessor 36 erzeugt ferner ein zweites einstellbares Zeitraster mit vergleichsweise längeren aufeinanderfolgenden Rasterintervallen b, die gemäß Fig. 3 beispielsweise eine Länge von 60 Sekunden haben. Während eines jeden Rasterintervalls b werden die zeitlich dazugehörigen digitalisierten Meßwerte mehrerer aufeinanderfolgender Rasterintervalle a von dem Additionsglied 30 arithmetisch addiert und gemittelt. Die arithmetische Addition der digitalisierten Werte während des Rasterintervalls b ist in Fig. 3 an dritter Position von oben symbolisch durch eine Treppenkurve dargestellt.

Die jeweils am Ende der Rasterintervalle b vom Additionsglied 30 abgegebenen Meßwerte werden im Speicherglied 32 in zeitlich richtiger Zuordnung gespeichert und können somit auf dem Sichtgerät 34 zeitgerecht dargestellt werden. Im Speicherglied 32 wird jeweils eine begrenzte Anzahl der zuletzt angefallenen Meßwerte vom Additionsglied 30 gespeichert. Beispielsweise ist hierzu das Speicherglied 32 als Schieberegister aufgebaut, das von den Meßwerten durchlaufen wird.

Mit dem Zufallsgenerator 38 kann die Lage der Integrationsintervalle c innerhalb der Rasterintervalle zufallsgesteuert verschoben werden.

Die Einrichtung kann im Rahmen der Erfindung vielseitig abgewandelt werden. So sind beispielsweise die Rasterintervalle a, b der Zeitraster sowie die Anzahl und Lage der Integrationsvalle c innerhalb der Rasterintervalle a und die Anzahl der jeweils im Speicherglied 32 gleichzeitig gespeicherten Meßwerte den jeweiligen Bedürfnissen anpaßbar. Auch der gerätechnische Detailaufbau ist vielseitig abwandelbar.

## Patentansprüche

1. Verfahren zum Bestimmen des zeitlichen Verlaufs der Bestrahlungsstärke am Ort von zumindest einer zu untersuchenden Probe, die sich in einem abgeschlossenen Probenraum eines Bewitterungsprüfgerätes auf einer kreisförmigen Bewegungsbahn um eine stationäre Bestrahlungsanordnung zum Erzeugen von UV- und Globalstrahlung bewegt, mit wenigstens einem die momentane Bestrahlungsstärke der Bestrahlungsanordnung erfassenden Sensor, der sich zusammen mit der zumindest einen Probe sowie zu dieser in Bezug auf die Bestrahlungsanordnung versetzt, wie in Umfangsrichtung der Bewegungsbahn versetzt, im wesentlichen auf der Bewegungsbahn bewegt, wobei von dem Sensor in zeitlichen Abständen ein der momentanen Bestrahlungsstärke entsprechendes elektrisches Meßsignal abgeleitet wird,
**dadurch gekennzeichnet,**
**daß** das Meßsignal entsprechend einem ersten, einstellbaren Zeitraster mit relativ kurzen Rasterintervallen in jedem dieser kurzen Rasterintervalle mindestens einmal über ein bestimmtes Integrationsintervall einstellbarer zeitlicher Länge analog integriert wird,
**daß** die so erhaltenen analog integrierten Meßwerte eines jeden kurzen Rasterintervalls digitalisiert werden,
**daß** die digitalisierten Meßwerte mehrerer aufeinanderfolgender Rasterintervalle des ersten Zeitrasters entsprechend einem zweiten, einstellbaren Zeitraster mit vergleichsweise längeren Rasterintervallen in jedem dieser längeren Rasterintervalle arithmetisch addiert und gemittelt werden und
**daß** die so erhaltenen arithmetisch addierten, gemittelten Meßwerte zeitlich zuordnungsfähig und abrufbar digital abgespeichert werden.

2. Verfahren nach Anspruch 1, **dadurch gekennzeichnet, daß** die arithmetisch addierten, gemittelten Meßwerte über einen einstellbaren längeren Zeitraum abrufbar gespeichert werden.

3. Verfahren nach Anspruch 1 oder 2, **dadurch gekennzeichnet, daß** die Integrationsintervalle innerhalb aufeinanderfolgender Rasterintervalle des ersten Zeitrasters zeitlich verschoben werden.

4. Verfahren nach Anspruch 3, **dadurch gekennzeichnet, daß** die Integrationsintervalle innerhalb aufeinanderfolgender Rasterintervalle des ersten Zeitrasters zeitlich unregelmäßig, wie zufallsgesteuert, verschoben werden.

5. Verfahren nach einem der Ansprüche 1 bis 4, **dadurch gekennzeichnet, daß** das erste Zeitraster konstante Rasterintervalle von etwa 500 Millisekunden aufweist, daß pro Rasterintervall ein Integrationsintervall mit einer Länge von etwa 200 bis etwa 500 Millisekunden benutzt wird und daß das zweite Zeitraster konstante Rasterintervalle von etwa 60 Sekunden aufweist.

6. Verfahren nach einem der Ansprüche 1 bis 5, **dadurch gekennzeichnet, daß** die Integrationsintervalle des ersten Zeitrasters jeweils am Ende der konstanten Rasterintervalle enden.

7. Verfahren nach einem der Ansprüche 1 bis 5, **dadurch gekennzeichnet, daß** die Integrationsintervalle des ersten Zeitrasters jeweils am Anfang der konstanten Rasterintervalle beginnen.

8. Verfahren nach einem der Ansprüche 1 bis 7, **dadurch gekennzeichnet, daß** pro Rasterintervall des ersten Zeitrasters mindestens zwei sich zeitlich nicht überschneidende Integrationsintervalle benutzt werden.

9. Verfahren nach Anspruch 8, **dadurch gekennzeichnet, daß** die mindestens zwei Integrationsintervalle gleich lang sind.

10. Verfahren nach Anspruch 8, **dadurch gekennzeichnet, daß** die mindestens zwei Integrationsintervalle unterschiedlich lang sind und daß ihre Gesamtlänge in allen Rasterintervallen des ersten Zeitrasters gleich groß ist.

11. Verfahren nach einem der Ansprüche 1 bis 10, **dadurch gekennzeichnet, daß** zusätzlich zur Bestrahlungsstärke weitere Meßgrößen, wie die Luftfeuchte und/oder die Lufttemperatur, entsprechend dem bestrahlungsabhängigen Meßsignal erfaßt und weiterbehandelt werden.

12. Einrichtung zum Durchführen des Verfahrens nach einem der Ansprüche 1 bis 7, mit wenigstens einem die momentane Bestrahlungsstärke der zentralen Bestrahlungsanordnung erfassenden Sensor, der sich zusammen mit der zumindest einen Meßprobe sowie zu dieser in Bezug auf die Bestrahlungsanordnung versetzt, wie in Umfangsrichtung der Bewegungsbahn versetzt, auf der kreisförmigen Bewegungsbahn bewegt, wobei von dem Sensor ein der momentanen Bestrahlungsstärke entsprechendes elektrisches Meßsignal abgeleitet wird,
**dadurch gekennzeichnet,**
**daß** an den Ausgang des Sensors (20, 22) ein getakteter analoger Integrator (26) angeschlossen ist, der das Meßsignal entsprechend einem ersten, einstellbaren Zeitraster mit relativ kurzen Rasterintervallen (a) in jedem dieser kurzen Rasterintervalle mindestens einmal über ein bestimmtes Integrationsintervall (c) einstellbarer zeitlicher Länge analog integriert,
**daß** an den Ausgang des Integrators (26) ein Analog/Digital-Wandler (28) angeschlossen ist, der die analog integrierten Meßwerte des Integrators jeweils am Ende der einzelnen Integrationsintervalle (c) digitalisiert,
**daß** an den Ausgang des Analog/Digital-Wandlers (28) ein mittelwertbildendes Additionsglied (30) angeschlossen ist, das die digitalisierten Meßwerte mehrerer aufeinanderfolgender Rasterintervalle (a) des ersten Zeitrasters entsprechend einem zweiten, einstellbaren Zeitraster mit vergleichsweise längeren Rasterintervallen (b) in jedem dieser längeren Rasterintervalle arithmetisch addiert und mittelt und
**daß** an den Ausgang des Additionsgliedes (30) ein Speicherglied (32) zum zeitllich zuordnungsfähig abrufbaren Speichern aufeinanderfolgender, arithmetisch addierter, gemittelter Meßproben angeschlossen ist.

13. Einrichtung nach Anspruch 12, **dadurch gekennzeichnet, daß** der Integrator (26), der Analog/Digital-Wandler (28) und das Additionsglied (30) mit wenigstens einem einstellbaren Taktgenerator (36) verbunden sind.

14. Einrichtung nach Anspruch 11 oder 12, **gekennzeichnet durch** einen die ersten sowie zweiten Zeitraster und die Integrationsintervalle erzeugenden und die Einzelteile der Einrichtung steuernden Mikroprozessor (36).

15. Einrichtung nach einem der Ansprüche 12 bis 14, **dadurch gekennzeichnet, daß** das Speicherglied (32) als Schieberegister ausgebildet ist.

16. Einrichtung nach einem der Ansprüche 12 bis 15, **gekennzeichnet durch** einen an den Taktgenerator bzw. Mikroprozessor (36) angeschlossenen Zufallsgenerator (38) zum zufallsgesteuerten Verschieben der Integrationsintervalle.

## Claims

1. Method for determining the time curve of the intensity of radiation *in situ* of at least one sample to be inspected which moves on a circular movement path about a stationary radiation arrangement to produce UV and global radiation in a sealed sample space of a weathering testing device, with at least one sensor detecting the instantaneous intensity of radiation of the radiation arrangement, the sensor moving substantially on the movement path together with the at least one sample and offset thereto with respect to the radiation arrangement, such as offset in the peripheral direction of the movement path, an electric measuring signal corresponding to the instantaneous intensity of radiation being derived at time intervals from the sensor, **characterised in that** according to a first adjustable time grid with relatively short grid intervals, the measuring signal is integrated in an analogue manner in each of these short grid intervals at least once over a specific integration interval of adjustable time length, **in that** the measured values of each short grid interval integrated in an analogue manner and obtained in this way are digitalised, **in that** the digitalised measured values of a plurality of consecutive grid intervals of the first time grid are arithmetically added and averaged according to a second adjustable time grid with comparatively long grid intervals in each of these comparatively long grid intervals and **in that** the arithmetically added, averaged measured values thus obtained are digitally stored in a manner which is capable of time allocation and retrievable.

2. Method according to claim 1, **characterised in that** the arithmetically added, averaged measured values are retrievably stored over a time period of adjustable length.

3. Method according to claim 1 or 2, **characterised in that** the integration intervals are displaced with respect to time within consecutive grid intervals of the first time grid.

4. Method according to claim 3, **characterised in that** the integration intervals are displaced irregularly with respect to time, as if random-controlled, within consecutive grid intervals of the first time grid.

5. Method according to any one of claims 1 to 4, **characterised in that** the first time grid has constant grid intervals of about 500 milliseconds, **in that** one integration interval with a length of about 200 to about 500 milliseconds is used per grid interval and **in that** the second time grid has constant grid intervals of about 60 seconds.

6. Method according to any one of claims 1 to 5, **characterised in that** the integration intervals of the first time grid end at the respective end of the constant grid intervals.

7. Method according to any one of claims 1 to 5, **characterised in that** the integration intervals of the first time grid begin at the respective start of the constant grid intervals.

8. Method according to any one of claims 1 to 7, **characterised in that** at least two integration intervals which do not overlap in time are used per grid interval.

9. Method according to claim 8, **characterised in that** the at least two integration intervals are of equal length.

10. Method according to claim 8, **characterised in that** the at least two integration intervals are of different length and **in that** their total length is of equal size in all the grid intervals of the first time grid.

11. Method according to any one of claims 1 to 10, **characterised in that** in addition to the intensity of radiation, further measured variables, such as air humidity and/or air temperature, are detected in accordance with the radiation-dependent measuring signal and are further processed.

12. Device for carrying out the method according to any one of claims 1 to 7, with at least one sensor detecting the instantaneous intensity of radiation of the central radiation arrangement, the sensor moving on the circular movement path together with the at least one measured sample and offset thereto with respect to the radiation arrangement, such as offset in the peripheral direction of the movement path, an electric measuring signal corresponding to the instantaneous intensity of radiation being derived from the sensor, **characterised in that** a clocked analogue integrator (26) is connected to the output of the sensor (20, 22) which integrates the measuring signal in an analogue manner according to a first, adjustable time grid with relatively short grid intervals (a) in each of these short grid intervals at least once over a specific integration interval (c) of adjustable time length, **in that** connected to the output of the integrator (26) is an analogue/digital converter (28) which digitalises the measured values of the integrator integrated in an analogue manner at the respective end of the individual integration intervals (c), **in that** connected to the output of the analogue/digital converter (28) is an averaging addition member (30) which arithmetically adds and averages the digitalised measured values of a plurality of consecutive grid intervals (a) of the first time grid according to a second, adjustable time grid with comparatively long grid intervals (b) in each of these comparatively long grid intervals and **in that** a memory member (32) is connected to the output of the addition member (30), to store arithmetically added, averaged measured samples in a manner which is capable of time allocation and retrievable.

13. Device according to claim 12, **characterised in that** the integrator (26), the analogue/digital converter (28) and the addition member (30) are connected to at least one adjustable clock generator (36).

14. Device according to claim 11 or 12, **characterised by** a microprocessor (36) producing the first and second time grid and the integration intervals and controlling the individual parts of the device.

15. Device according to any one of claims 12 to 14, **characterised in that** the memory member (32) is designed as a shift register.

16. Device according to any one of claims 12 to 15, **characterised by** a random-check generator (38) connected to the clock generator or microprocessor (36) for random-controlled displacement of the integration intervals.

## Revendications

1. Procédé permettant de déterminer la courbe dans le temps de l'intensité de rayonnement à l'emplacement d'au moins un échantillon à analyser, qui se déplace dans un espace d'échantillonnage fermé d'un dispositif d'essai de résistance aux intempéries sur une trajectoire circulaire autour d'un système d'irradiation stationnaire pour produire un rayonnement UV et global, avec au moins un capteur qui enregistre l'intensité de rayonnement momentanée du système d'irradiation et qui se déplace essentiellement sur la trajectoire avec l'échantillon, au moins, ainsi qu'en déport de ce dernier par rapport au système d'irradiation, comme un déport dans le sens périphérique de la trajectoire, un signal de mesure électrique correspondant à l'intensité de rayonnement momentanée est dérivé du capteur à intervalles de temps, **caractérisé en ce que**
le signal de mesure, suivant une première grille de temps réglable avec des intervalles de grille relativement courts, est intégré analogiquement dans chacun de ces courts intervalles de grille au moins une fois sur un intervalle d'intégration défini d'une longueur réglable dans le temps,
**en ce que** les valeurs de mesure ainsi obtenues, intégrées analogiquement, de chaque court intervalle de grille sont numérisées, **en ce que** les valeurs de mesure numérisées de plusieurs intervalles de grille successifs de la première grille de temps, suivant une seconde grille de temps réglable avec des intervalles de grille comparativement plus longs, sont additionnées et moyennées arithmétiquement dans chacun de ces intervalles de grille plus longs, et
**en ce que** les valeurs de mesure ainsi obtenues, additionnées et moyennées arithmétiquement, sont mémorisées numériquement avec une possibilité d'interrogation et d'affectation dans le temps.

2. Procédé suivant la revendication 1, **caractérisé en ce que** les valeurs de mesure additionnées et moyennées arithmétiquement sont mémorisées avec une possibilité d'interrogation sur une période réglable prolongée.

3. Procédé suivant l'une des revendications 1 et 2, **caractérisé en ce que** les intervalles d'intégration sont décalés dans le temps à l'intérieur d'intervalles de grille successifs de la première grille de temps.

4. Procédé suivant la revendication 3, **caractérisé en ce que** les intervalles d'intégration sont décalés irrégulièrement dans le temps, tel que par commande aléatoire, à l'intérieur d'intervalles de grille successifs de la première grille de temps.

5. Procédé suivant l'une des revendications 1 à 4, **caractérisé en ce que** la première grille de temps présente des intervalles de grille constants d'environ 500 millisecondes, **en ce qu'**un intervalle d'intégration d'une longueur d'environ 200 à environ 500 millisecondes est utilisé par intervalle de grille, et **en ce que** la seconde grille de temps présente des intervalles de grille constants d'environ 60 secondes.

6. Procédé suivant l'une des revendications 1 à 5, **caractérisé en ce que** les intervalles d'intégration de la première grille de temps s'achèvent respectivement à la fin des intervalles de grille constants.

7. Procédé suivant l'une des revendications 1 à 5, **caractérisé en ce que** les intervalles d'intégration de la première grille de temps commencent respectivement au début des intervalles de grille constants.

8. Procédé suivant l'une des revendications 1 à 7, **caractérisé en ce qu'**au moins deux intervalles d'intégration ne se recoupant pas dans le temps sont utilisés par intervalle de grille de la première grille de temps.

9. Procédé suivant la revendication 8, **caractérisé en ce que** les deux intervalles d'intégration, au moins, sont de longueur égale.

10. Procédé suivant la revendication 8, **caractérisé en ce que** les deux intervalles d'intégration, au moins, sont de longueur différente, et **en ce que** leur longueur totale est égale dans tous les intervalles de grille de la première grille de temps.

11. Procédé suivant l'une des revendications 1 à 10, **caractérisé en ce que** d'autres grandeurs de mesure, telles que l'humidité atmosphérique et/ou la température de l'air, sont enregistrées et traitées suivant le signal de mesure dépendant du rayonnement, en supplément de l'intensité de rayonnement.

12. Dispositif pour la mise en oeuvre du procédé suivant l'une des revendications 1 à 7, comprenant au moins un capteur qui enregistre l'intensité de rayonnement momentanée du système d'irradiation central et qui se déplace sur la trajectoire circulaire avec l'échantillon de mesure, au moins, ainsi qu'en déport de ce dernier par rapport au système d'irradiation, comme en déport dans le sens périphérique de la trajectoire, tandis qu'un signal de mesure électrique correspondant à l'intensité de rayonnement momentanée est dérivé du capteur,
**caractérisé en ce qu'**un intégrateur analogique synchronisé (26) est raccordé à la sortie du capteur (20, 22), cet intégrateur intégrant analogiquement du signal de mesure, suivant une première grille de temps réglable avec des intervalles de grille relativement courts (a), dans chacun de ces courts intervalles de grille au moins une fois sur un intervalle d'intégration (c) défini d'une longueur réglable dans le temps,
**en ce qu'**un convertisseur analogique/numérique (28) est raccordé à la sortie de l'intégrateur (26), ce convertisseur numérisant les valeurs de mesure de l'intégrateur, intégrées analogiquement, respectivement à la fin des intervalles d'intégration (c) individuels,
**en ce qu'**un additionneur (30) établissant les valeurs moyennes est raccordé à la sortie du convertisseur analogique/numérique (28), cet additionneur additionnant et moyennant arithmétiquement les valeurs de mesure numérisées de plusieurs intervalles de grille successifs (a) de la première grille de temps, suivant une seconde grille de temps réglable avec des intervalles de grille (b) comparativement plus longs, dans chacun de ces intervalles de grille plus longs, et **en ce qu'**un élément de mémoire (32) pour la mémorisation avec une possibilité d'interrogation et d'affectation dans le temps d'échantillons de mesure successifs additionnés et moyennés arithmétiquement est raccordé à la sortie de l'additionneur (30).

13. Dispositif suivant la revendication 12, **caractérisé en ce que** l'intégrateur (26), le convertisseur analogique/numérique (28) et l'additionneur (30) sont reliés à au moins une horloge du générateur (36) réglable.

14. Dispositif suivant l'une des revendications 11 et 12, **caractérisé par** un microprocesseur (36) générant les premières, ainsi que les secondes, grilles de temps et les intervalles d'intégration et commandant les éléments du dispositif.

15. Dispositif suivant l'une des revendications 12 à 14, **caractérisé en ce que** l'élément de mémoire (32) est réalisé sous forme de registre de décalage.

16. Dispositif suivant l'une des revendications 12 à 15, **caractérisé par** un générateur de nombres aléatoires (38), raccordé à l'horloge du générateur, respectivement au microprocesseur (36), pour le décalage par commande aléatoire des intervalles d'intégration.
